# EUROPÄISCHE PATENTSCHRIFT

(11) **EP 3 049 852 B1**
(45) Veröffentlichungstag und Bekanntmachung des Hinweises auf die Patenterteilung: **11.03.2020**
(21) Anmeldenummer: 14776852.7
(22) Anmeldetag: 25.09.2014
(51) Int. Cl.: G02B 27/00, G02B 27/01, G02C 7/08

(54) **BRILLENGLAS FÜR EINE AUF DEN KOPF EINES BENUTZERS AUFSETZBARE UND EIN BILD ERZEUGENDE ANZEIGEVORRICHTUNG UND ANZEIGEVORRICHTUNG MIT EINEM SOLCHEN BRILLENGLAS**
SPECTACLES GLASS SUITABLE TO BE PLACED ON THE HEAD OF A USER AND A DISPLAY DEVICE GENERATING AN IMAGE AND ALSO A DISPLAY DEVICE FOR SUCH AN SPECTACLES GLASS
VERRE DE LUNETTES POUVANT ÊTRE PLACÉS SUR LA TÊTE D'UN UTILISATEUR ET UN SYSTÈME D'AFFICHAGE GÉNÉRANT UNE IMAGE, AINSI QU'UN SYSTÈME D'AFFICHAGE AVEC UN TEL VERRE

(30) Priorität: 27.09.2013 DE 102013219626
(43) Veröffentlichungstag der Anmeldung: 03.08.2016
(73) Patentinhaber: tooz technologies GmbH, 73430 Aalen (DE)
(72) Erfinder: DOBSCHAL, Hans-Jürgen, 99510 Kleinromstedt (DE); LINDIG, Karsten, 99084 Erfurt (DE); RIEDEL, Lisa, 07749 Jena (DE)
(74) Vertreter: Patentanwälte Geyer, Fehners & Partner mbB
(86) Internationale Anmeldenummer: PCT/EP2014/070558
(87) Internationale Veröffentlichungsnummer: WO 2015/044303

(56) Entgegenhaltungen:
- EP-A1- 1 385 023
- US-A1- 2005 073 739
- US-A1- 2007 070 859
- US-A1- 2013 069 260
- US-B1- 6 671 100

## Beschreibung

Die vorliegende Erfindung betrifft ein Brillenglas für eine auf den Kopf eines Benutzers aufsetzbare und ein Bild erzeugende Anzeigevorrichtung sowie eine Anzeigevorrichtung mit einem solchen Brillenglas.

Solche Brillengläser weisen häufig, in Draufsicht auf das Brillenglas gesehen, einen Einkoppelabschnitt in einem Randbereich des Brillenglases und einen Auskoppelabschnitt in einem Mittelbereich des Brillenglases auf, wobei das Brillenglas dazu geeignet ist, Lichtbündel von Pixeln des erzeugten Bildes, die über den Einkoppelabschnitt des Brillenglases in das Brillenglas eingekoppelt sind, im Brillenglas bis zum Auskoppelabschnitt zu führen und über den Auskoppelabschnitt aus dem Brillenglas auszukoppeln. Zur Führung zwischen dem Ein- und Auskoppelabschnitt wird häufig eine innere Totalreflexion an der Vorderseite und Rückseite des Brillenglases genutzt, wobei, wenn die Vorder- und/oder Rückseite gekrümmt ist, durch den totalreflexionsmäßig bedingten schrägen Einfall auf die gekrümmte Fläche Fehler wie Astigmatismus und Koma auftreten können. Dabei spielt es keine Rolle, ob das Licht vor Eintreten in das Brillenglas kollimiert ist oder nicht.

Grundsätzlich ist es möglich, diese Fehler durch eine entsprechende Ausbildung des Einkoppel- und/oder Auskoppelabschnittes zu kompensieren. Dies ist jedoch äußerst aufwendig, da für jede unterschiedlich gekrümmte Vorder- und/oder Rückseite die notwendige Korrektur berechnet und das entsprechende Brillenglas einzeln hergestellt werden müßte. Dies würde zu einem sehr hohen Kostenaufwand sowie zu einem sehr hohen logistischen Aufwand führen.

Ausgehend hiervon ist es daher Aufgabe der Erfindung, ein Brillenglas für eine auf den Kopf eines Benutzers aufsetzbare und ein Bild erzeugende Anzeigevorrichtung bereitzustellen, das die eingangs genannten Schwierigkeiten möglichst vollständig überwindet.

Die Aufgabe wird durch ein Brillenglas für eine auf den Kopf eines Benutzers aufsetzbare und ein Bild erzeugende Anzeigevorrichtung gelöst, wobei das Brillenglas einen eine Vorderseite und eine Rückseite aufweisenden Brillenglaskörper, wobei die Vorderseite und/oder die Rückseite gekrümmt sind/ist und der Brillenglaskörper zumindest einen ersten und einen zweiten Teilkörper aufweist, deren einander zugewandte Grenzflächen in direktem Kontakt stehen, aufweist, wobei, in Draufsicht auf das Brillenglas gesehen, ein Einkoppelabschnitt in einem Randbereich des Brillenglases und ein Auskoppelabschnitt in einem Mittelbereich des Brillenglases vorgesehen ist,
wobei das Brillenglas dazu geeignet ist, Lichtbündel von Pixeln des erzeugten Bildes, die über den Einkoppelabschnitt des Brillenglases in das Brillenglas eingekoppelt sind, im Brillenglas bis zum Auskoppelabschnitt zu führen und über den Auskoppelabschnitt aus dem Brillenglas auszukoppeln, wobei eine plane erste Reflexionsfläche und eine von der ersten Reflexionsfläche beabstandete plane zweite Reflexionsfläche im Brillenglaskörper vorgesehen sind, die sich jeweils in einer Richtung vom Einkoppelabschnitt zum Auskoppelabschnitt erstrecken und die jeweils von der Vorder- und Rückseite des Brillenglaskörpers beabstandet sind,
wobei die Lichtbündel durch Reflexionen an den beiden Reflexionsflächen in der Richtung vom Einkoppelabschnitt zum Auskoppelabschnitt geführt sind und wobei zumindest eine der ersten und zweiten Reflexionsfläche im ersten oder zweiten Teilkörper und beabstandet von der Grenzfläche des entsprechenden Teilkörpers vorgesehen ist. Somit ist die entsprechende Reflexionsfläche zur Grenzfläche des entsprechenden Teilkörpers in der Richtung von dem einen zum anderen Teilkörper versetzt angeordnet. Die entsprechende Reflexionsfläche kann auch als im entsprechenden Teilkörper vergrabene Reflexionsfläche bezeichnet werden.

Da die Führung der Lichtbündel vom Einkoppelabschnitt zum Auskoppelabschnitt über die beiden planen Reflexionsflächen und somit unabhängig von der Vorder- und Rückseite erfolgt, kann die Lichtführung optisch unabhängig von Vorder- und Rückseite behandelt werden. Somit können Auskoppel- und/oder Einkoppelabschnitt in Verbindung mit den beiden Reflexionsflächen in der gewünschten Art und Weise unabhängig von der Krümmung der Rückseite ausgelegt werden. Damit ist es möglich, selbst verschiedene Brillengläser, die unterschiedliche optische Fehlsichtigkeiten korrigieren, in gleicher Weise bezüglich der Führung der Lichtbündel und Auskopplung der Lichtbündel zu behandeln.

Des weiteren können unerwünschte Aberrationen (z.B. Astigmatismus und Koma), die bei der Führung zwischen Einkoppel- und Auskoppelabschnitt auftreten können, minimiert werden.

Bei dem erfindungsgemäßen Brillenglas kann die erste Reflexionsfläche im ersten Teilkörper und beabstandet von der Grenzfläche des ersten Teilkörpers vorgesehen sein und kann die zweite Reflexionsfläche im zweiten Teilkörper und beabstandet von der Grenzfläche des zweiten Teilkörpers vorgesehen sein. Alternativ ist es möglich, dass die erste Reflexionsfläche im ersten Teilkörper und beabstandet von der Grenzfläche des ersten Teilkörpers vorgesehen ist und die zweite Reflexionsfläche an der Grenzfläche des zweiten Teilkörpers ausgebildet ist.

Da der Brillenglaskörper zumindest den ersten und zweiten Teilkörper aufweist, können die Reflexionsflächen leicht hergestellt werden und danach die beiden Teilkörper miteinander verbunden werden, um das gewünschte Brillenglas zu erhalten.

Der Auskoppelabschnitt kann ein Pupillenexpander für die Lichtbündel aufweisen. Damit ist es möglich, eine große Austrittspupille für einen Benutzer bereitzustellen.

Insbesondere sind die erste und zweite Reflexionsfläche parallel zueinander.

Der Auskoppelabschnitt kann einen ersten Umlenkabschnitt mit einer reflektiven Fresnel-Struktur aufweisen, die die Lichtbündel so in Richtung zur Rückseite umlenkt, dass sie über die Rückseite ausgekoppelt werden. Die Fresnel-Struktur kann insbesondere mehrere reflektive Facetten aufweisen, die in einer Richtung vom Randbereich zum Mittelbereich nebeneinander angeordnet sind. Die Facetten können teilreflektive Facetten sein oder auch rein reflektive Facetten (mit einer Reflexion von möglichst 100%). Des weiteren können die Facetten ohne Zwischenräume (lateral) nebeneinander angeordnet sein (in Draufsicht auf die Facetten bilden sie somit eine zusammenhängende Fläche) oder es können Zwischenräume vorgesehen sein (in Draufsicht auf die Facetten sind dann die Zwischenräume sichtbar).

Insbesondere kann die Transparenz der Facetten in der Richtung vom Randbereich zum Mittelbereich hin abnehmen (und somit die Reflektivität in dieser Richtung zunehmen).

Ferner können jeweils zwei direkt benachbarte Facetten durch eine transparente oder teiltransparente Flanke verbunden sein.

Die erste Reflexionsfläche kann sich in den Auskoppelbereich erstrecken, wobei die Fresnel-Struktur, in Richtung der auf die erste Reflexionsfläche fallenden Lichtbündel gesehen, vor der ersten Reflexionsfläche liegt. Insbesondere können in diesem Fall die Facetten auf der ersten Reflexionsfläche ausgebildet sein, so dass eine plane Fresnel-Struktur vorliegt. Ferner kann der Bereich zwischen den Facetten und der ersten Reflexionsfläche mit einem Material aufgefüllt sein, dass dem Material des Teilkörpers entspricht, in dem die erste Reflexionsfläche liegt. Somit können die Facetten auch als vergrabene Facetten bezeichnet werden. Durch diese Ausbildung wird der Vorteil erreicht, dass der Teil der Lichtbündel, der von der jeweiligen Facette nicht reflektiert sondern transmittiert wird, an der ersten Reflexionsfläche in Richtung zur zweiten Reflexionsfläche reflektiert und von dieser wiederum auf die Facetten (lateral beabstandete Facetten, bezogen auf die vorherige Auskopplung) gelenkt wird. Somit wird die gewünschte Erweiterung der Austrittspupille erreicht.

Die zweite Reflexionsfläche kann sich bis in den Auskoppelbereich erstrecken, wobei die Fresnel-Struktur, in Richtung der auf die zweite Reflexionsfläche fallenden Lichtbündel gesehen, vor der zweiten Reflexionsfläche liegt.

Bei dem erfindungsgemäßen Brillenglas können die erste und die zweite Reflexionsfläche durch Grenzflächen einer Führungsplatte gebildet sein, die in den ersten und/oder zweiten Teilkörper eingesetzt ist. Damit kann ein Element bereitgestellt werden, das für verschiedenste Brillengläser die gewünschte Lichtführung und Auskoppelung bereitstellt. Insbesondere weist die Führungsplatte die Fresnel-Struktur zur Auskopplung der Lichtbündel auf. Des weiteren kann die Führungsplatte auch eine refraktive und/oder reflektive Einkoppeloptik aufweisen, die die auf sie treffenden Lichtbündel so umlenkt, dass sie von den beiden Reflexionsflächen bis zum Auskoppelabschnitt geführt werden.

Ferner ist es möglich, dass die erste und/oder zweite Reflexionsfläche im ersten und/oder zweiten Teilkörper (direkt) ausgebildet ist.

Unter einer Facette wird insbesondere ein Flächenstück, ein Flächenelement oder eine Fläche verstanden. Das Flächenstück, das Flächenelement bzw. die Fläche kann die beschriebene optische Wirkung der Facette bereitstellen.

Es wird ferner ein Brillenglas für eine auf den Kopf eines Benutzers aufsetzbare und ein Bild erzeugende Anzeigevorrichtung bereitgestellt, wobei das Brillenglas einen eine Vorderseite und eine Rückseite aufweisenden Brillenglaskörper umfaßt, wobei die Vorderseite und/oder die Rückseite gekrümmt sind/ist und der Brillenglaskörper einteilig ausgebildet ist, und wobei, in Draufsicht auf das Brillenglas gesehen, ein Einkoppelabschnitt in einem Randbereich des Brillenglases und ein Auskoppelabschnitt in einem Mittelbereich des Brillenglases vorgesehen ist, wobei das Brillenglas dazu geeignet ist, Lichtbündel von Pixeln des erzeugten Bildes, die über den Einkoppelabschnitt des Brillenglases in das Brillenglas eingekoppelt sind, im Brillenglas bis zum Auskoppelabschnitt zu führen und über den Auskoppelabschnitt aus dem Brillenglas auszukoppeln, wobei eine plane erste Reflexionsfläche und eine von der ersten Reflexionsfläche beabstandete plane zweite Reflexionsfläche im Brillenglaskörper vorgesehen sind, die sich jeweils in einer Richtung vom Einkoppelabschnitt zum Auskoppelabschnitt erstrecken und die jeweils von der Vorder- und Rückseite des Brillenglaskörpers beabstandet sind, wobei die Lichtbündel durch Reflexionen an den beiden Reflexionsflächen in Richtung vom Einkoppelabschnitt zum Auskoppelabschnitt geführt sind.

Durch die beiden planen Reflexionsflächen kann die Lichtführung unabhängig von der Krümmung der Rückseite durchgeführt werden, so dass einerseits unerwünschte Aberrationen bei der Lichtführung minimiert werden können und andererseits eine Lichtführung unabhängig von der Krümmung von Vorder- und Rückseite bereitgestellt werden kann.

Die erste und zweite Reflexionsfläche können durch Grenzflächen einer Führungsplatte gebildet sein, die in den einteiligen Brillenglaskörper eingesetzt ist. Insbesondere kann der einteilige Brillenglaskörper eine die Vorder- und Rückseite verbindende Stirnseite aufweisen, von der sich eine Ausnehmung in den Brillenglaskörper erstreckt, wobei die Führungsplatte in der Ausnehmung positioniert ist.

Die Führungsplatte kann im Auskoppelabschnitt einen ersten Umlenkabschnitt mit einer reflektiven Fresnel-Struktur aufweisen, die Lichtbündel so in Richtung zur Rückseite umlenkt, dass sie über die Rückseite ausgekoppelt werden.

Die Fresnel-Struktur des ersten Umlenkabschnittes kann mehrere reflektive Facetten aufweisen, die in einer Richtung vom Randbereich zum Mittelbereich nebeneinander angeordnet sind. Dabei können die reflektiven Facetten mit einem Abstand voneinander angeordnet sein (in Draufsicht sind Lücken erkennbar) oder ohne Abstand (in Draufsicht bilden die reflektiven Facetten eine durchgehende Fläche).

Die Facetten können als teilreflektive Facetten oder als rein reflektive Facetten (mit möglichst 100% Reflexion) ausgebildet sein. Die Transparenz der teilreflektiven Facetten kann in Richtung vom Randbereich zum Mittelbereich hin abnehmen (und somit nimmt die Reflexion in dieser Richtung zu).

Es ist möglich, dass jeweils zwei direkt benachbarte Facetten durch eine transparente Flanke oder teiltransparente Flanke verbunden sind.

Ferner kann der Bereich zwischen den Facetten und der ersten Reflexionsfläche so mit Material der Führungsplatte aufgefüllt sein, dass die erste Reflexionsfläche im Bereich der Facetten als glatte Fläche ausgebildet ist.

Bei den erfindungsgemäßen Brillengläsern kann die erste und/oder zweite Reflexionsfläche die Reflexion der Lichtbündel durch innere Totalreflexion bewirken.

Alternativ ist es möglich, dass die erste und/oder zweite Reflexionsfläche durch eine Reflexionsschicht gebildet ist. Diese Reflexionsschicht kann eine Einzelschicht oder auch ein Schichtensystem sein.

Ferner kann im Bereich des Einkoppelabschnitts ein zweiter Umlenkabschnitt vorgesehen sein, der die Lichtbündel so umlenkt, dass sie durch Reflexion an der ersten und zweiten Reflexionsfläche bis zum Auskoppelabschnitt geführt sind.

Ferner kann der Einkoppel- und/oder Auskoppelabschnitt eine abbildende Wirkung aufweisen. Darüber hinaus kann der Einkoppelabschnitt eine Kollimationswirkung aufweisen. Ferner kann der Einkoppelabschnitt refraktiv und/oder reflektiv sein.

Bei den erfindungsgemäßen Brillengläsern kann die Führungsplatte seitlich über die Brillenglaskörper vorstehen, wobei der Einkoppelabschnitt in dem vorstehenden Teil der Führungsplatte ausgebildet ist.

Die Facetten sind bevorzugt so ausgebildet, dass sie keinen gewünschten diffraktiven Effekt erzeugen.

Es wird ferner eine Anzeigevorrichtung mit einer auf den Kopf eines Benutzers aufsetzbaren Haltevorrichtung, einem an der Haltevorrichtung befestigten Bilderzeugungsmodul, das ein Bild erzeugt, und einer an der Haltevorrichtung befestigten Abbildungsoptik bereitgestellt, die ein erfindungsgemäßen Brillenglas aufweist und die das erzeugte Bild im auf den Kopf aufgesetzten Zustand der Haltevorrichtung so abbildet, dass es der Benutzer als virtuelles Bild wahrnehmen kann.

Die Abbildungsoptik kann das Brillenglas als einziges optisches Element aufweisen. Es ist jedoch auch möglich, dass die Abbildungsoptik neben dem Brillenglas noch zumindest ein weiteres optisches Element umfaßt.

So kann das weitere optische Element z.B. eine Kollimationsoptik sein, die zwischen dem Brillenglas und dem Bilderzeugungsmodul angeordnet ist, so dass die Lichtbündel vom Bilderzeugungsmodul als kollimierte Bündel in das Brillenglas eingekoppelt werden.

Das Bilderzeugungsmodul kann insbesondere einen flächigen Bildgeber aufweisen, wie z.B. ein LCD-Modul, ein LCoS-Modul, ein OLED-Modul oder eine Kippspiegelmatrix. Der Bildgeber kann selbstleuchtend oder nicht selbstleuchtend sein.

Das Bilderzeugungsmodul kann insbesondere so ausgebildet sein, dass es ein monochromatisches oder ein mehrfarbiges Bild erzeugt.

Die erfindungsgemäße Anzeigevorrichtung kann weitere, dem Fachmann bekannte Elemente aufweisen, die zu ihrem Betrieb notwendig sind.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Die Erfindung ist in den Ansprüchen definiert. Nachfolgend wird die Erfindung beispielsweise anhand der beigefügten Zeichnungen, die auch erfindungswesentliche Merkmale offenbaren, noch näher erläutert. Es zeigen:
- Fig. 1: eine schematische perspektivische Darstellung einer Ausführungsform der erfindungsgemäßen Anzeigevorrichtung;
- Fig. 2: eine Detailschnittansicht des ersten Brillenglases 3 von Fig. 1;
- Fig. 3: eine vergrößerte Schnittansicht der Führungsplatte 14 im Bereich des Einkoppelabschnittes;
- Fig. 4: eine vergrößerte Schnittansicht der Führungsplatte 14 im Bereich des Auskoppelabschnittes;
- Fig. 5: eine schematische Schnittansicht des ersten Brillenglases 3;
- Fig. 6 bis 8: Schnittansichten des Brillenglases zur Erläuterung der Ausleuchtung in der Austrittspupille;
- Fig. 9-11: Draufsichten der ausgekoppelten Lichtbündel für unterschiedliche Feldpunkte bei gleicher Position der Augenpupille;
- Fig. 12 und 13: Draufsichten der ausgekoppelten Lichtbündel für unterschiedliche Feldpunkte bei gleicher Position der Augenpupille;
- Fig. 14 und 15: Draufsichten der ausgekoppelten Lichtbündel für unterschiedliche Feldpunkte bei gleicher Position der Augenpupille;
- Fig. 16: eine Schnittansicht des rechten Brillenglases gemäß einem nicht einschränkenden Beispiel;
- Fig. 17: eine Schnittansicht des rechten Brillenglases gemäß einem nicht einschränkenden Beispiel;
- Fig. 18: eine Schnittansicht des rechten Brillenglases gemäß einem nicht einschränkenden Beispiel;
- Fig. 19: eine Schnittansicht des rechten Brillenglases gemäß einer weiteren Ausführungsform;
- Fig. 20: eine Schnittansicht der beiden Teilkörper 35 und 36 gemäß Fig. 19;
- Fig. 21: eine Schnittansicht der beiden Teilkörper mit eingesetzter Führungsplatte 14;
- Fig. 22: eine Variante der beiden Teilkörper gemäß Fig. 20;
- Fig. 23: eine Variante der beiden Teilkörper gemäß Fig. 20;
- Fig. 24: eine Schnittansicht des rechten Brillenglases gemäß einer weiteren Ausführungsform;
- Fig. 25: eine Ansicht des Teilkörpers 35 der Ausführungsform von Fig. 25;
- Fig. 26: eine vergrößerte Ansicht des Details B von Fig. 25 zur Erläuterung der Herstellung des erfindungsgemäßen Brillenglases;
- Fig. 27: eine vergrößerte Ansicht des Details B von Fig. 25 zur Erläuterung der Herstellung des erfindungsgemäßen Brillenglases, und
- Fig. 28: eine vergrößerte Ansicht des Details B von Fig. 25 zur Erläuterung der Herstellung des erfindungsgemäßen Brillenglases.

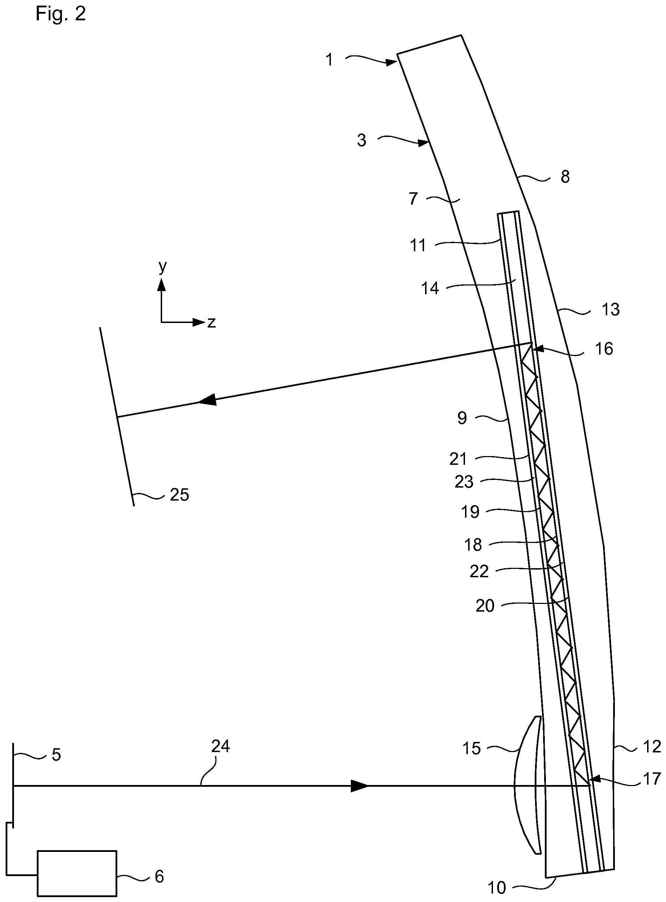

- Figuren 2, 6-8 und 16-18: zeigen Beispiele, die nicht zur Erfindung gehören und von den Ansprüchen nicht gedeckt sind.

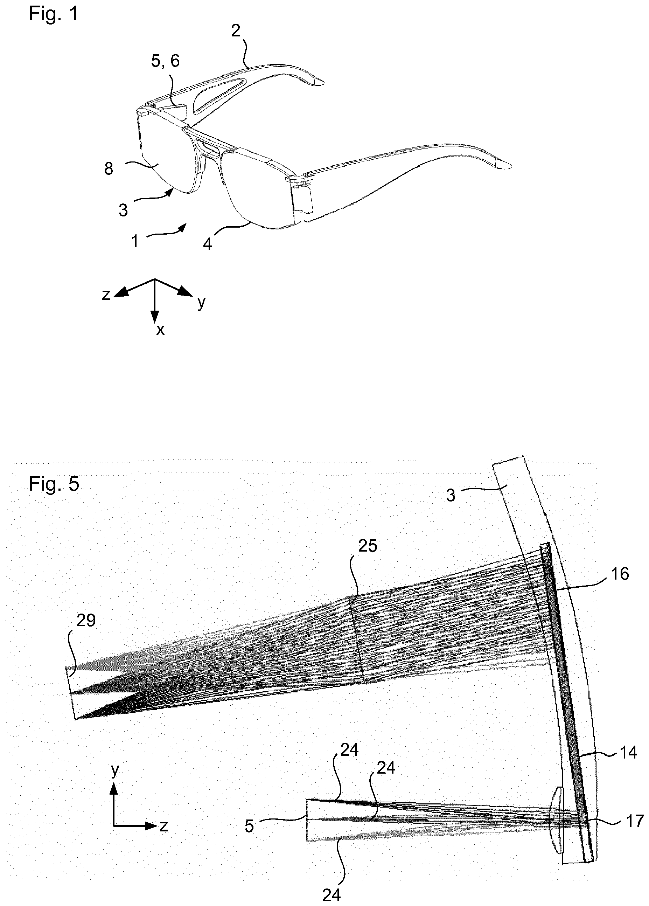

Bei der in Fig. 1 gezeigten Ausführungsform umfaßt die erfindungsgemäße Anzeigevorrichtung 1 eine auf den Kopf eines Benutzers aufsetzbare Haltevorrichtung 2, die z.B. in Art eines herkömmlichen Brillengestells ausgebildet sein kann, sowie ein erstes und ein zweites Brillenglas 3, 4, die an der Haltevorrichtung 2 befestigt sind. Die Haltevorrichtung 2 mit den Brillengläsern 3 und 4 kann z.B. als Sportbrille, Sonnenbrille und/oder Brille zur Korrektur einer Fehlsichtigkeit ausgebildet sein, wobei dem Benutzer über das erste Brillenglas 3 ein virtuelles Bild in sein Gesichtsfeld eingespiegelt werden kann, wie nachfolgend beschrieben wird.

Die Brillengläser 3, 4 und insbesondere das rechte Brillenglas 3 sind nur beispielshalber zusammen mit der erfindungsgemäßen Anzeigevorrichtung 1 beschrieben. Die Brillengläser 3, 4 bzw. zumindest das rechte Brillenglas 3 sind jeweils für sich als erfindungsgemäßes Brillenglas 3, 4 ausgebildet. Das erfindungsgemäße rechte Brillenglas 3 kann natürlich auch als linkes Brillenglas ausgebildet sein.

Wie am besten aus der Detailschnittansicht des ersten (rechten) Brillenglases 3 in Fig. 2 ersichtlich ist (die Haltevorrichtung 2 ist nicht dargestellt), umfaßt die Anzeigevorrichtung 1 ein Bilderzeugungsmodul 5, eine Steuereinheit 6 sowie eine Einkoppeloptik 15. Das Bilderzeugungsmodul 5, die Steuereinheit 6 und die Einkoppeloptik 15 sind rein schematisch dargestellt und bevorzugt an der Haltevorrichtung 2 befestigt. Das Bilderzeugungsmodul 5 kann z.B. einen flächigen Lichtmodulator (wie z.B. einen OLED-, CMOS- oder LCoS-Chip oder eine Kippspiegelmatrix) mit einer Vielzahl von z.B. in Spalten und Zeilen angeordneten Pixeln aufweisen. Von jedem Pixel kann ein Lichtbündel 24 ausgehen.

Das rechte Brillenglas 3 weist einen einteiligen Brillenglaskörper 7 mit einer sphärisch gekrümmten Vorderseite 8, einer gekrümmten Rückseite 9 und einer Stirnfläche 10 auf. Da bei dem beschriebenen Ausführungsbeispiel das Brillenglas 3 zur Fehlsichtigkeitskorrektur dient, ist die Krümmung der Rückseite 9 so gewählt, dass die gewünschte Fehlsichtigkeitskorrektur vorliegt. Die sphärische Krümmung der Vorderseite 8 kann dann einem Standardradius entsprechen, der sich in Abhängigkeit der notwendigen Korrektur der Rückseite (Dioptrienzahl) ergibt.

Wie in Fig. 2 ersichtlich ist, weist der Brillenglaskörper 7 eine schlitzförmige Ausnehmung 11 auf, die sich von der Stirnfläche 10 und somit von einem Randbereich 12 des Brillenglases bis zu einem Mittelbereich 13 erstreckt.

In der Ausnehmung 11 ist eine planparallele Führungsplatte 14 eingesetzt, die dazu dient, das vom Bilderzeugungsmodul 5 erzeugte Bild (und somit die von jedem Pixel ausgehenden Lichtbündel 24) vom Randbereich 13 bis zum Mittelbereich 12 zu führen und dort so auszukoppeln, dass es ein die Anzeigevorrichtung 1 tragender Benutzer als virtuelles Bild (bevorzugt in Überlagerung mit der Umgebung) wahrnehmen kann.

Dazu weist die Führungsplatte 14 einen ersten und zweiten Umlenkabschnitt 16, 17 auf und ist so in die Ausnehmung 11 eingesetzt, dass sowohl eine erste Seite 18 der Führungsplatte 14 von der gegenüberliegenden ersten Wandungsfläche 20 der Ausnehmung 11 als auch eine zweite Seite 19 der Führungsplatte 14 von der gegenüberliegenden zweiten Wandungsfläche 21 der Ausnehmung 11 jeweils beabstandet ist. An beiden Seiten 18, 19 der planparallelen Führungsplatte 14 liegt somit jeweils ein Luftspalt 22, 23 vor, der dazu genutzt wird, um das vom Bilderzeugungsmodul 5 kommende Bild (bzw. die entsprechenden Lichtstrahlen oder Lichtbündel 24 der Pixel des Bildes) zwischen dem zweiten und dem ersten Umlenkabschnitt 16, 17 durch innere Totalreflexion an der ersten und zweiten Seite 18, 19 zu führen. Die beiden Seiten 18, 19 bilden somit zwischen den beiden Umlenkabschnitten 16, 17 jeweils eine plane Reflexionsfläche.

In Fig. 2 ist schematisch ein Lichtstrahl 24 eingezeichnet, der vom Bilderzeugungsmodul 5 über die Einkoppeloptik 15 auf den zweiten Umlenkabschnitt 17 (der auch als Einkoppelabschnitt bezeichnet werden kann) der Führungsplatte 14 trifft, dort so umgelenkt wird, dass er durch innere Totalreflexion an der ersten und zweiten Seite 18, 19 bis zum ersten Umlenkabschnitt 16 (der auch als Auskoppelabschnitt bezeichnet werden kann) geführt wird. Am ersten Umlenkabschnitt 16 wird der Lichtstrahl 24 in Richtung zur Augenpupille eines die Anzeigevorrichtung 1 tragenden Benutzers hin umgelenkt, so dass der Lichtstrahl 24 durch die Seite 19 der Führungsplatte (aufgrund des durch die Umlenkung vorliegenden kleinen Einfallswinkels findet keine innere Totalreflexion an der Seite 19 mehr statt) und über die Rückseite 9 aus dem Brillenglaskörper 7 austritt und dann von dem Auge des Benutzers im Bereich 25 erfaßt werden kann.

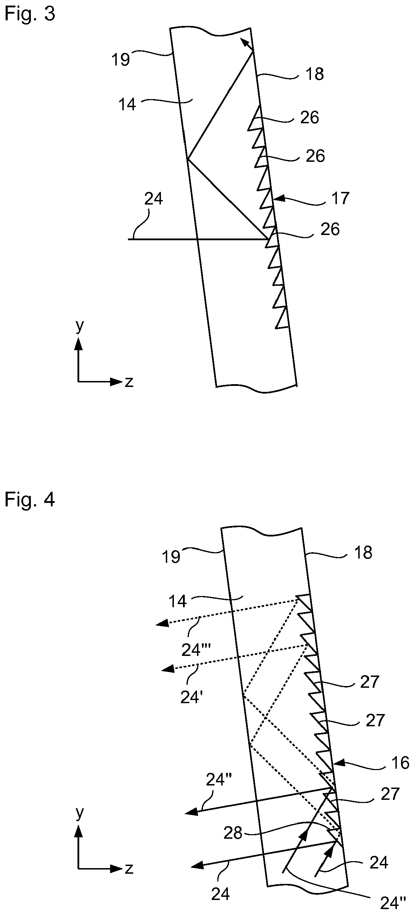

In Fig. 3 ist der zweite Umlenkabschnitt 17 in einer vergrößerten Detailansicht der Führungsplatte 14 schematisch dargestellt. Der zweite Umlenkabschnitt 17 weist eine Vielzahl von reflektiven Facetten 26 auf, die das einfallende Licht 24 so umlenken, dass es dann mittels innerer Totalreflexion an den beiden Seiten 19 und 18 bis zum ersten Umlenkabschnitt 16 geführt werden kann. Bei der in Fig. 3 gezeigten Ausführungsform sind die durch die Facetten 26 vorhandenen Vertiefungen mit dem Material der Führungsplatte 14 aufgefüllt, so dass die erste Seite 18 auch im Bereich des zweiten Umlenkabschnittes 17 plan ausgebildet ist. Die Facetten 26 können auch als vergrabene Facetten bezeichnet werden.

In Fig. 4 ist in einer vergrößerten Detailansicht der erste Umlenkabschnitt 16 schematisch dargestellt. Der erste Umlenkabschnitt 16 weist eine Vielzahl von teilreflektiven Facetten 27 auf, wobei jeweils zwei unmittelbar benachbarte teilreflektive Facetten durch eine Flanke 28 verbunden ist. Die Flanke 28 kann reflektiv sein. Bevorzugt ist sie jedoch teilreflektiv oder transparent.

Für den Lichtstrahl 24 ist schematisch die Umlenkung an einer Facette 27 dargestellt. Aufgrund der teilreflektiven Ausbildung der Facetten 27 wird der nicht an der Facette 27 reflektierte Teil 24' (gestrichelt dargestellt) transmittiert, trifft auf die erste Seite 18, an der eine innere Totalreflexion stattfindet, durchläuft die Flanke 28, so dass er nach erneuter innerer Totalreflexion an der zweiten Seite 19 auf eine weitere Facette 27 trifft und zum Bereich 25 hin umgelenkt wird.

Es ist auch möglich, dass der von einer Facette 27 transmittierte Teil durch die Flanke 28 läuft und auf die nächste Facette 27 trifft und von dieser reflektiert und dadurch ausgekoppelt wird (Lichtstrahl 24"). An dieser nächsten Facette 27 wird natürlich auch wieder ein Teil des Lichtstrahls 24" transmittiert, der an der ersten Seite 18 durch innere Totalreflexion reflektiert wird, auf die zweite Seite 19 trifft und nach erneuter innerer Totalreflexion an der zweiten Seite 19 auf eine weitere Facette 27 triff und von dieser zum Bereich 25 hin umgelenkt wird (Lichtstrahl 24").

Durch diese Art der Mehrfachauskopplung an lateral versetzten Orten wird ein sogenannter Pupillenexpander realisiert, so dass im Bereich 25 eine große Austrittspupille bzw. eine große Eyebox (der Bereich, der durch die Anzeigevorrichtung 1 bereitgestellt wird und in dem sich das Auge des Benutzers bewegen kann und er stets noch das ausgekoppelte Bild wahrnehmen kann) bereitgestellt wird.

Um diese Mehrfachauskopplung zu realisieren, sind im ersten Umlenkabschnitt 16 die durch die Facetten 27 vorhandenen Vertiefungen mit Material der Führungsplatte 14 so aufgefüllt, dass im Bereich des ersten Umlenkabschnittes 16 die erste Seite 18 plan ist. Damit kann die gewünschte Totalreflexion des durch die Facetten 27 transmittierten Lichtes an der ersten Seite 18 erreicht werden. Die Facetten 27 können als vergrabene Facetten bezeichnet werden.

Um eine gleichmäßige Helligkeit in der Eyebox zu erreichen, sind die teilreflektiven Facetten 27 so ausgebildet, dass ihre Transparenz in der Richtung vom zweiten zum ersten Umlenkabschnitt 17, 16 (also in Fig. 4 von unten nach oben) abnimmt und somit ihre Reflektivität in dieser Richtung zunimmt.

Bei der hier beschriebenen Ausführungsform sind die erste und zweite Seite 18, 19 um 0,8 mm voneinander beabstandet. Um eine Eyebox mit einer lateralen Abmessung (etwa in y-Richtung) von 10 mm bei einem Sichtfeld (field of view) von 15° x 10° zu erzielen, werden in Abhängigkeit der Position der Feldpunkte bzw. Pixel des mittels des Bilderzeugungsmoduls 5 erzeugten Bildes fünf bis neun horizontale Auskopplungen benötigt.

Die Länge der Führungsplatte ist hier 20 bis 25 mm (Ausdehnung in Richtung vom zweiten Umlenkabschnitt 17 hin zum ersten Umlenkabschnitt 16) und die Breite der beiden Luftspalte 22, 23 beträgt jeweils 0,1 mm. Das Brillenglas 3 weist eine Dicke von 3,5 mm bei einem Radius der Vorderseite 8 von 90 mm auf.

Aufgrund der sehr dünnen Platte 14 ist ein Bündeldurchmesser einer einzelnen Auskopplung nicht ausreichend, um die Eyebox 25 in lateraler Richtung zu füllen. Pro Feldpunkt sind daher beispielsweise zwei oder drei benachbarte Auskopplungen notwendig, um die in der Eyebox 25 positionierte Augenpupille des Benutzers zu füllen. Diese z.B. zwei oder drei Auskopplungen sollten daher auf den gleichen (innerhalb der Augenauflösung liegenden) Bildpunkt auf der Netzhaut abgebildet werden. Es soll also Deckungsgleichheit vorliegen. Hierunter wird insbesondere verstanden, dass im Rahmen einer Augenauflösung von kleiner als 1 min der gleiche Ort auf der Netzhaut getroffen wird. Man kann auch sagen, dass für diese benachbarten Auskopplungen für einen Feldpunkt der gleiche Hauptstrahlwinkel vorliegt.

Dies kann dadurch erreicht werden, dass die teilreflektiven Facetten 27 nicht nur eine reine strahlumlenkende Eigenschaft aufweisen, sondern dass sie auch eine abbildende Funktion haben. Dies läßt sich leicht durch eine Optimierungsrechnung bestimmen. Dabei geht man von einer gekrümmten reflektiven Fläche aus, die dann durch die teilreflektiven Facetten 27 angenähert wird. Dabei können die einzelnen Facetten 27 plan oder gekrümmt sein. Ein derartiges Vorgehen ist beispielsweise in der WO 2010/097442 A1 und in der WO 2010/097439 A1 beschrieben, wobei die entsprechende Beschreibung samt Figuren dieser Druckschriften hiermit in die vorliegende Offenbarung aufgenommen wird.

Um eine möglichst gute Überlagerung des dem Benutzer dargebotenen virtuellen Bildes mit der Umgebung zu erzielen, weisen die Lichtstrahlen 24, 24', 24", 24'" nach der Umlenkung am ersten Umlenkabschnitt 16 die Richtungen auf, als ob sie durch die sphärische Vorderseite 8 hindurchgetreten wären. Die Lichtstrahlen 24, 24', 24", 24'" nach der Umlenkung am ersten Umlenkabschnitt 16 weisen somit den Effekt der sphärischen Vorderseite 8 auf. Dies kann beispielsweise durch eine entsprechende Auslegung des ersten und/oder zweiten Umlenkabschnittes 16, 17 realisiert werden. Es ist auch möglich, diese Wirkung durch eine entsprechende Auslegung der Einkoppeloptik 15 zu unterstützen.

Da sich die Fehlsichtigkeitskorrekturen für den Benutzer bei der Betrachtung der Umgebung durch die Krümmung von Vorder- und Rückseite 8, 9 ergibt und die am ersten Umlenkabschnitt 16 umgelenkten Lichtstrahlen 24, 24', 24", 24'" noch durch die Rückseite 9 laufen, sind diese für den Benutzer in gleicher Weise korrigiert wie die Lichtstrahlen der Umgebung. Der Benutzer kann somit sowohl die Umgebung als auch das eingespiegelte virtuelle Bild scharf wahrnehmen.

Nachdem bei dem erfindungsgemäßen Brillenglas 3 bzw. der erfindungsgemäßen Anzeigevorrichtung 1 die Führung des Bildes nicht durch Reflexion an der Vorder- und/oder Rückseite 8, 9 stattfindet, kann diese Führung unabhängig von der konkreten Ausbildung von der Rückseite 9 behandelt werden. Dies führt einerseits zu dem Vorteil, dass es leichter möglich ist, Abbildungsfehler zu vermeiden. Andererseits kann die gleiche Führungsplatte 14 für verschiedene Brillengläser 3 (insbesondere für Brillengläser 3, die sich in ihrer Fehlsichtigkeitskorrektur unterscheiden) ohne Änderung verwendet werden. Das ursprüngliche Brillenglas kann mit seiner normalen Dicke verwendet werden. Falls seine normale Dicke nicht ausreicht, muß lediglich eine relativ kleine Dickenreserve (ca. 1 mm) für die Führungsplatte 14 inklusive der beiden Luftspalte 22, 23 vorgesehen werden.

In Fig. 5 ist in ähnlicher Weise wie in Fig. 2 in einer Schnittansicht das Brillenglas 3 samt Bilderzeugungsmodul 5 und Steuereinheit 6 dargestellt, wobei jedoch noch schematisch die Position 29 der Netzhaut eines Auges eines die Anzeigevorrichtung tragenden Benutzer eingezeichnet ist und neun Auskopplungen gezeigt sind.

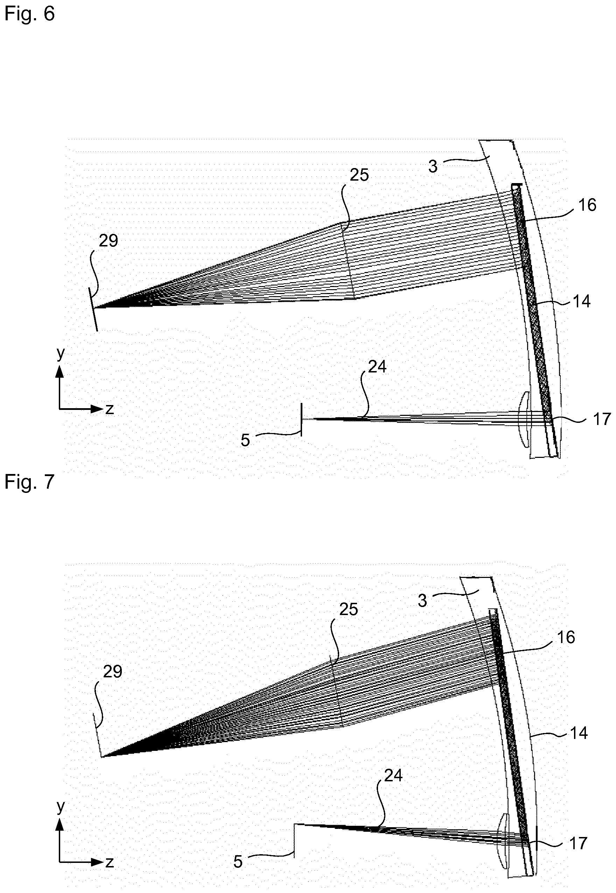

Zur Verdeutlichung der neun Auskopplungen sind in Fig. 6 alle wirksamen Auskopplungen für einen Bildpunkt des erzeugten Bildes in der Feldmitte bei voller Eyebox 25 mit der Ausdehnung von 10 mm in y-Richtung dargestellt.

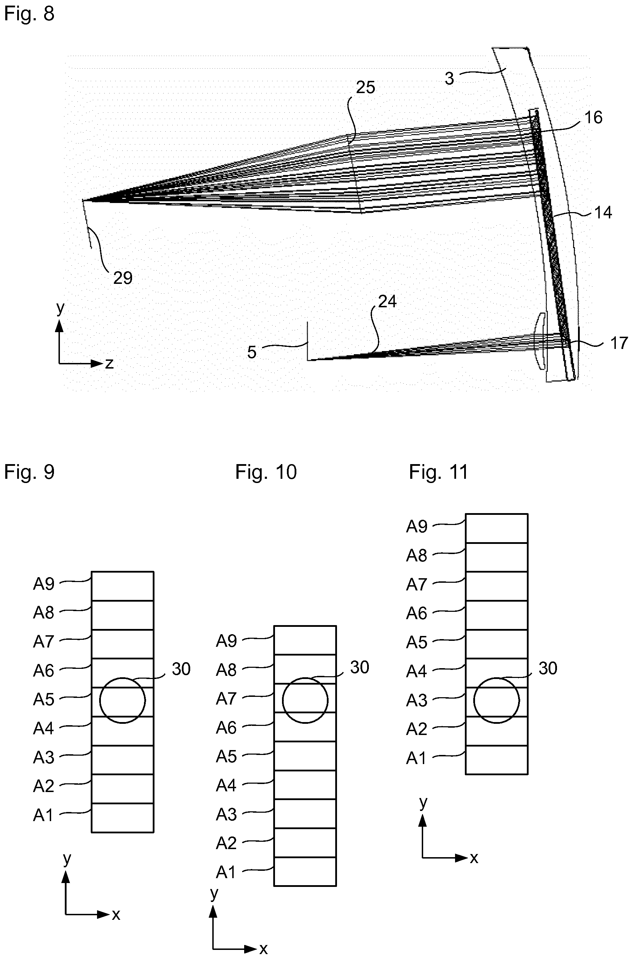

In Fig. 7 und 8 sind jeweils alle wirksamen Auskopplungen für einen Punkt des unteren Feldrandes bzw. für einen Punkt des oberen Feldrandes bei jeweils wieder voller Eyebox 25 gezeigt.

In Fig. 9 ist die Ausleuchtung der Augenpupille 30 gezeigt, wobei hier von einem Durchmesser der Augenpupille von 3 mm ausgegangen wird. Für die Feldmitte tragen hier die Auskopplungen Nr. 4, 5 und 6 bei, wenn die Augenpupille 30 in der Mitte der Eyebox positioniert ist (die erste bis neunte Auskopplung wird mit A1 - A9 bezeichnet). Für die beiden Feldränder sind bei in der Mitte der Eyebox liegender Augenpupille 30 die Auskopplungen 6 bis 8 bzw. 2 bis 4 relevant, wie in Fig. 10 und 11 gezeigt ist.

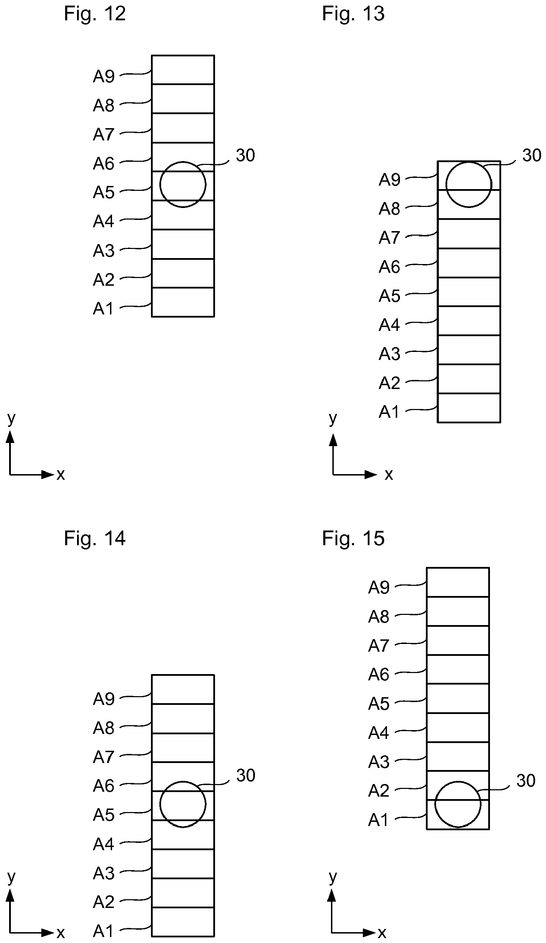

Wenn die Augenpupille am oberen Eyeboxrand liegt (d.h. + 3,5 mm dezentriert ist), sind für die Ausleuchtung für die beiden Feldränder die Auskopplungen 4 bis 6 bzw. 8, 9 relevant, wie in Fig. 12 und 13 gezeigt ist. Bei einer Dezentrierung der Augenpupille von - 3,5 mm tragen die Auskopplungen 4 bis 6 bzw. 1 und 2 für die beiden Feldränder bei, wie in Fig. 14, 15 gezeigt ist.

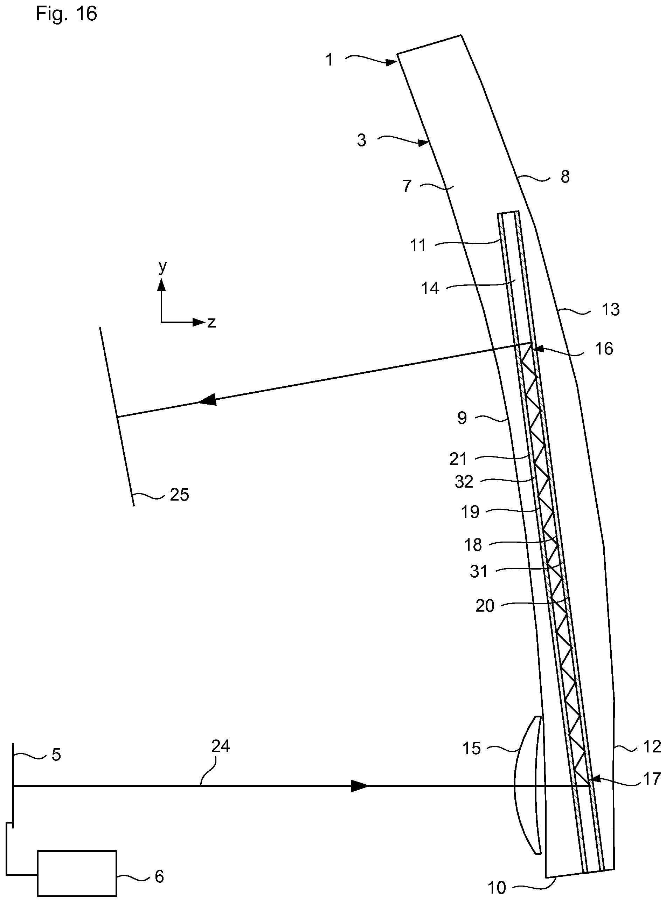

Bei der bisher beschriebenen Ausführungsform erfolgt die Führung des Bildes in der Führungsplatte 14 durch interne Totalreflexion an der ersten und zweiten Seite 18, 19. Es ist natürlich auch möglich, die erste und zweite Seite 18, 19 mit einer reflektiven oder teilreflektiven Schicht zu versehen. Insbesondere kann ein Schichtsystem vorgesehen werden, das den Effekt der inneren Totalreflexion in der Art nachstellt, dass bis zu einem vorbestimmten Einfallswinkel die Schicht transmissiv und ab dem vorbestimmten Einfallswinkel die Schicht reflektiv wirkt. Eine solche reflektive Schicht bzw. ein solches reflektives Schichtsystem 31, 32 ist in Fig. 16 schraffiert dargestellt. Die reflektive Schicht bzw. das reflektive Schichtsystem 31, 32 kann in einer weiteren alternativen Ausführungsform auch auf der ersten und zweiten Wandungsfläche 20, 21 ausgebildet sein.

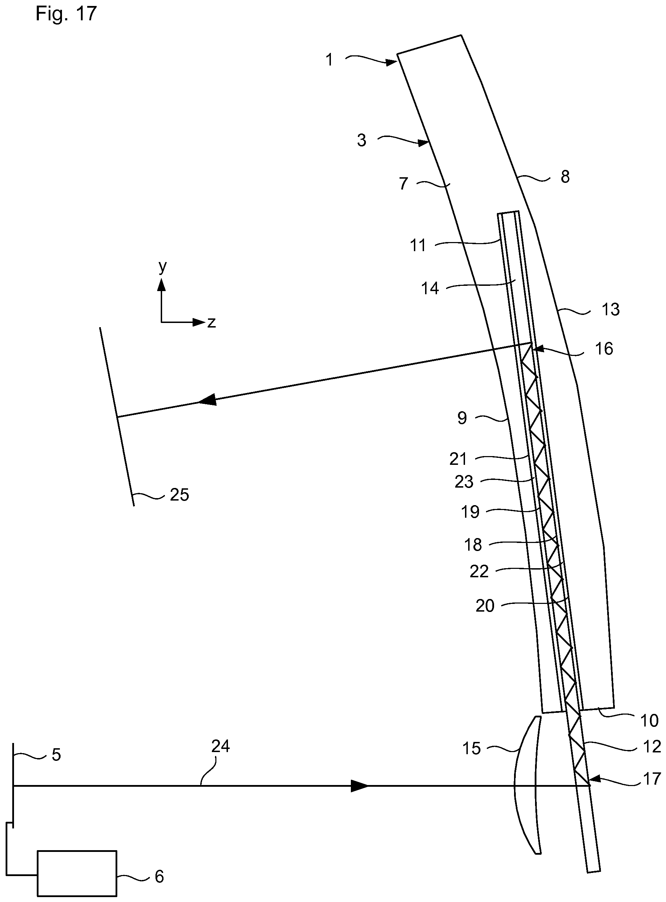

In Fig. 17 ist ein nicht einschränkendes Beispiel der Anzeigenvorrichtung 1 gemäß Fig. 1 bis 15 dargestellt. Bei diesem in Fig. 17 gezeigten nicht einschränkenden Beispiel steht die Führungsplatte 14 über die Stirnseite 10 vor, so dass der zweite Umlenkabschnitt 17 außerhalb des Brillenglaskörpers 7 liegt. Damit muss das Licht 24 zur Einkopplung in die Führungsplatte 14 nicht durch die gekrümmte Rückseite 9 geführt werden. Dies erleichtert die Einkopplung, weil der Effekt der gekrümmten Rückseite 9 nicht mehr zu berücksichtigen ist.

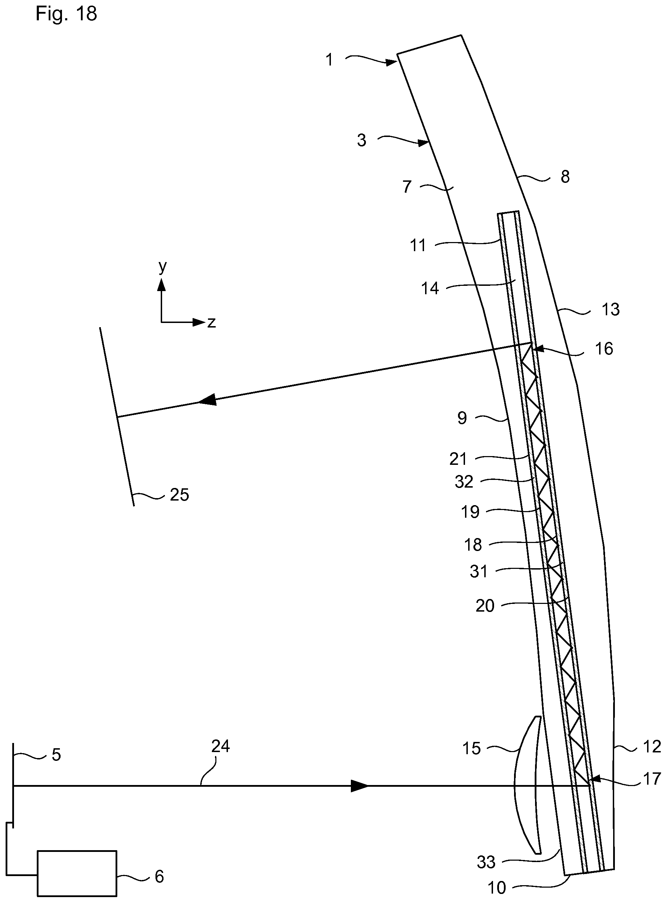

In Fig. 18 ist eine Abwandlung des nicht einschränkenden Beispiels gemäß Fig. 16 gezeigt. Hier ist der Bereich der Rückseite 9, über den die Einkopplung bis zur Führungsplatte 14 erfolgt, als planer Bereich 33 ausgebildet. Damit muss nicht mehr die Krümmung der Rückseite 9 bei der Einkopplung berücksichtigt werden. Der Bereich 33 der Rückseite 9, über den die Einkopplung bis zur Führungsplatte erfolgt, muß nicht plan sein, sondern kann jede gewünschte Form aufweisen. Natürlich ist es z. B. auch möglich, die Einkoppeloptik 15 integral als Bereich 33 auszubilden.

Bei den bisher beschriebenen Ausführungsformen ist der Brillenglaskörper 7 stets einstückig ausgebildet. Die schlitzförmige Ausnehmung 11 kann beispielsweise durch eine materialabtragende Bearbeitung durch die Stirnseite 10 gebildet sein. Die Führungsplatte 14 kann auch als Einschubplatte bezeichnet werden, die über die Öffnung in der Stirnseite 10 in die Ausnehmung 11 eingeschoben wird. Sie kann dann z.B. im Bereich der Öffnung in der Stirnseite 10 und im Bereich des der Stirnseite 10 abgewandten Endes mit dem Brillenglasträger verbunden (z.B. verklebt) sein.

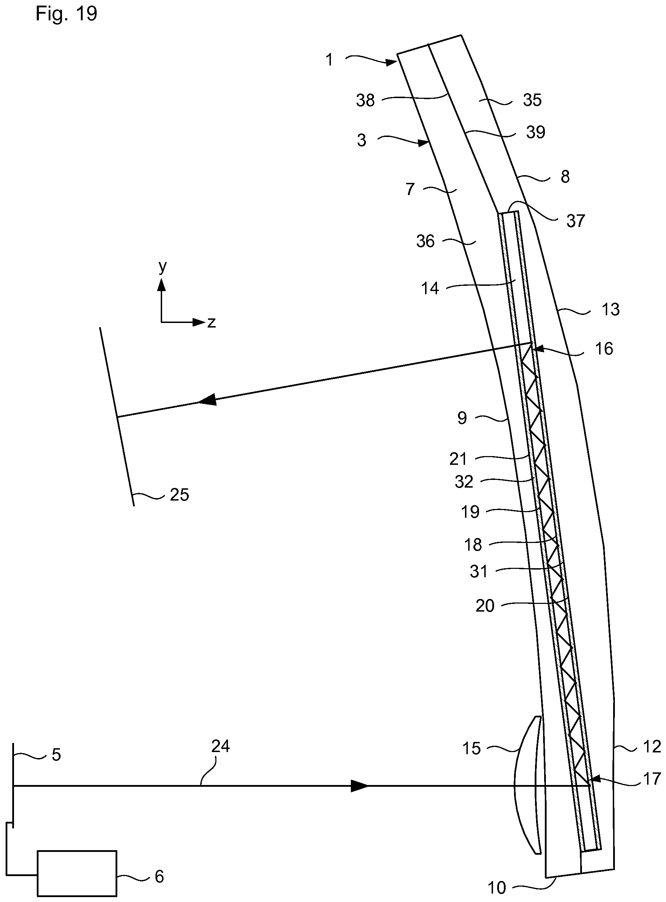

In Fig. 19 ist eine Ausführung der erfindungsgemäßen Anzeigevorrichtung 1 bzw. des erfindungsgemäßen Brillenglases 3 gezeigt, bei dem der Brillenglaskörper 7 aus zwei Teilkörpern 35 und 36 gebildet ist. Die beiden Teilkörper 35 und 36 sind miteinander verbunden, wobei der Teilkörper 35 eine Ausnehmung 37 zur Aufnahme an der Führungsplatte 14 aufweist.

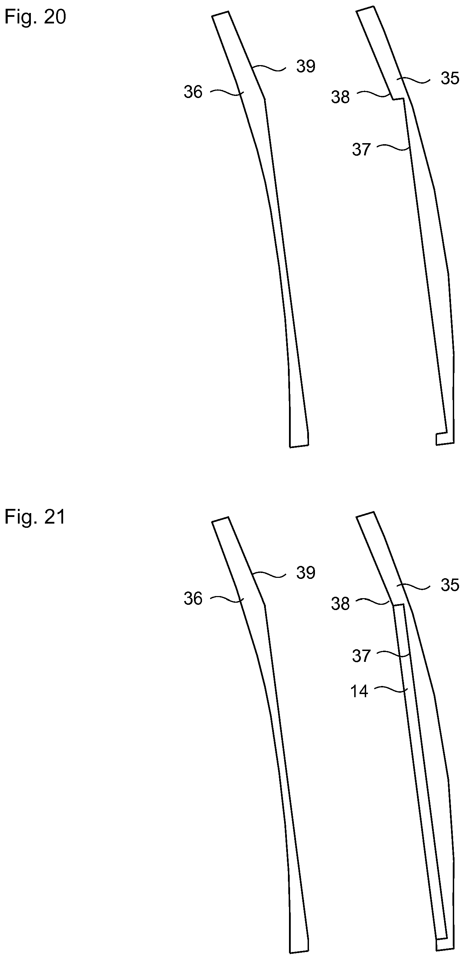

In Fig. 20 sind die beiden Teilkörper 35 und 36 als separate Teile dargestellt. Dabei weist der erste Teilkörper 35 eine zum zweiten Teilkörper 36 weisende erste Grenzfläche 38 auf. In der ersten Grenzfläche 38 ist die Ausnehmung 37 ausgebildet. Der zweite Teilkörper 36 weist eine zum ersten Teilkörper 35 weisende zweite Grenzfläche 39 auf. Im Bereich der anzuordnenden Führungsplatte 14 ist diese Grenzfläche 39 eben ausgebildet.

Zur Herstellung des Brillenglases 3 gemäß Fig. 19 wird die Führungsplatte 14 in die Ausnehmung 37 eingesetzt (Fig. 21) und werden dann die beiden Teilkörper 35 und 36 miteinander verbunden. Dies wird derart durchgeführt, dass die beiden Grenzflächen 38 und 39 dann in direktem Kontakt stehen. Beispielsweise können die beiden Grenzflächen 38 und 39 miteinander verkittet werden.

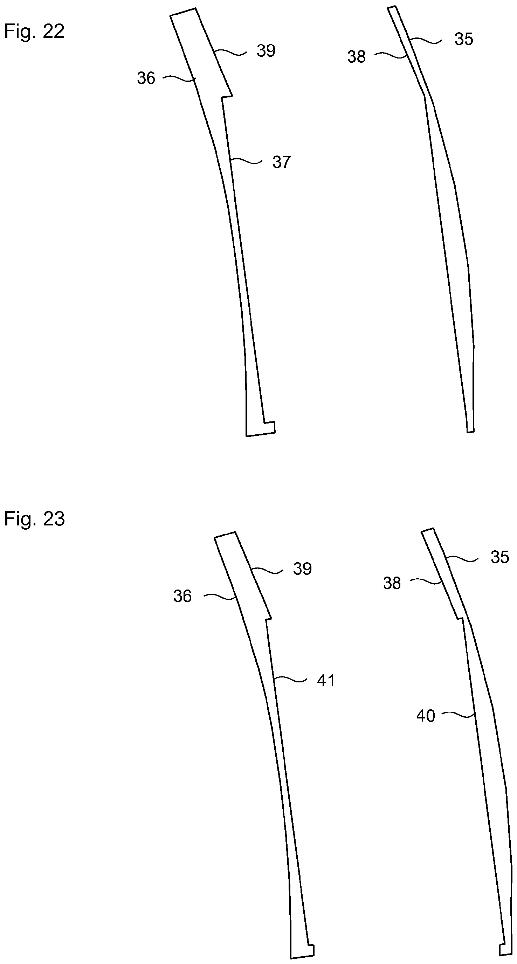

In Fig. 22 ist eine Abwandlung der beiden Teilkörper 35, 36 gemäß Fig. 21 gezeigt. Bei dieser Abwandlung ist die Ausnehmung 37 für die Führungsplatte 14 im zweiten Teilkörper 36 ausgebildet.

Bei der Anwandlung gemäß Fig. 23 weisen beide Teilkörper 35 und 36 jeweils eine Ausnehmung 40, 41 auf, die zusammen so ausgebildet sind, dass die Führungsplatte 14 dazwischen eingesetzt werden kann und die Grenzflächen 38 und 39 in den Bereichen neben des Ausnehmungen 40,41 noch in direktem Kontakt miteinander stehen.

Wie in den Darstellungen von Fig. 19 bis 23 gezeigt ist, ist die Führungsplatte 14 quasi im ersten und/oder zweiten Teilkörper 35, 36 vergraben. Die Führungsplatte 14 ist stets von den beiden Teilkörpern 35, 36 vollständig umschlossen. Dies führt dazu, dass die erste und/oder zweite Seite 18, 19 und somit die erste und/oder zweite Reflexionsfläche von der entsprechenden Grenzfläche 38, 39 beabstandet angeordnet ist.

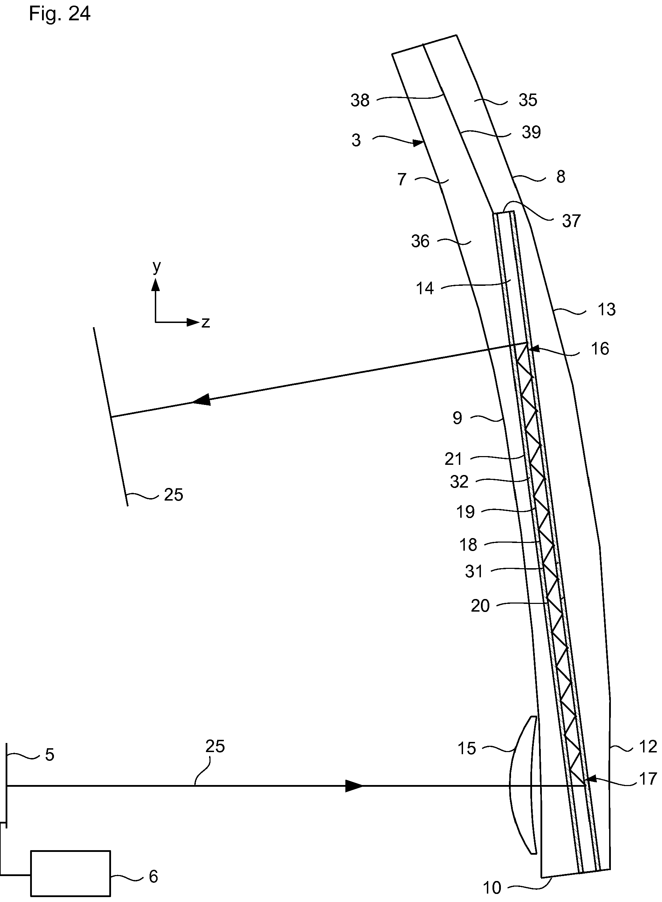

Bei der in Fig. 24 gezeigten Weiterbildung ist die Ausnehmung 37 im ersten Teilkörper 35 so ausgebildet, dass sie bis zur Stirnseite 10 läuft. Die Führungsplatte ist natürlich entsprechend angepasst und erstreckt sich dann auch bis zur Stirnseite 10.

In einer nicht gezeigten Abwandlung kann sich die Führungsplatte natürlich auch über die Stirnseite 10 hinaus erstrecken (vergleichbar mit der Ausführungsform gemäß Fig. 17).

Ferner kann bei den Ausführungsformen gemäß Fig. 19 bis 24 die Führung des Bildes zwischen dem zweiten und ersten Umlenkabschnitt 17, 16 durch innere Totalreflexion erfolgen. Alternativ kann eine entsprechende reflektive (bzw. teilreflektive) Schicht 31, 32 vorgesehen sein. Diese reflektive bzw. teilreflektive Schicht 31, 32 kann direkt auf der Führungsplatte 14 und/oder auf den entsprechenden Bereichen der beiden Grenzflächen 38 und 39 (insbesondere im Bereich der Ausnehmung 37, 40, 41) ausgebildet sein.

Bei den bisher beschriebenen Ausführungsformen gemäß Fig. 19 bis 24 wurde stets die planparallele Führungsplatte 14 eingesetzt, die auf der ersten Seite 18 die Facetten 27, 26 im ersten und zweiten Umlenkabschnitt 16, 17 aufweist. Es ist jedoch auch möglich, den zweiten Umlenkabschnitt 17 mit refraktiven Facetten auszubilden, die auf der zweiten Seite 19 ausgebildet sind.

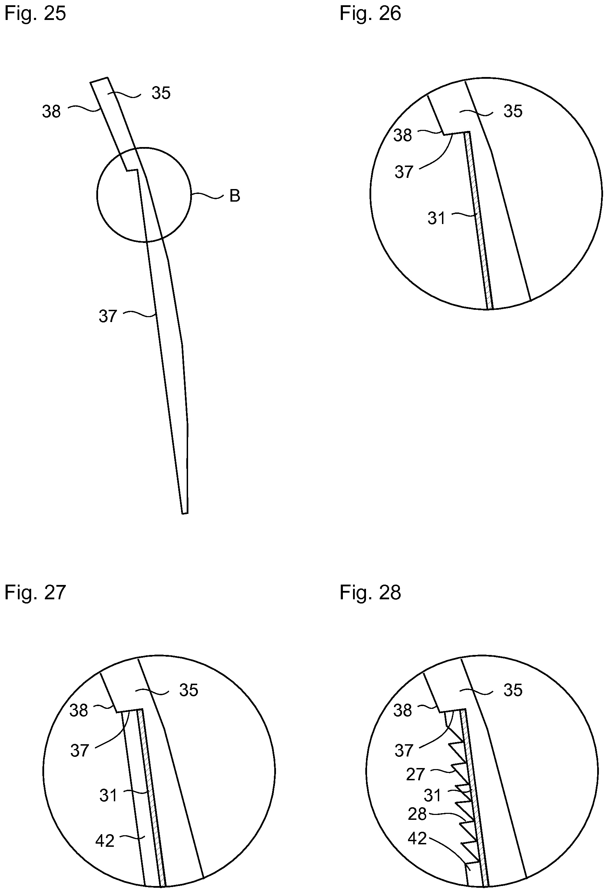

Ferner ist es möglich, auf die separate Führungsplatte 14 zu verzichten und beispielsweise die notwendigen Facetten direkt in der Ausnehmung 37 des ersten Teilkörpers 35 auszubilden. Zur Beschreibung der notwendigen Herstellungsschritte ist der erste Teilkörper 35 des Brillenglases 3 von Fig. 24 in Fig. 25 dargestellt. Um nun im ersten Umlenkabschnitt 17 (durch den Kreis B angedeutet) die notwendigen Facetten 27 auszubilden, kann wie folgt vorgegangen werden.

Zunächst wird eine entsprechende reflektive Schicht 31 in der Ausnehmung 37 aufgebracht, wie in der vergrößerten Detailansicht des Details B in Fig. 26 gezeigt ist.

Auf diese reflektive Schicht 31 wird eine transparente Schicht 42 aufgebracht (Fig. 27). Die transparente Schicht 42 ist bevorzugt aus dem gleichen Material gebildet wie der erste Teilkörper 35.

In die transparente Schicht 42 wird die Form der teilreflektiven Facetten 27 ausgebildet (beispielsweise durch einen Prägeprozess) und werden dann die Facetten 27 selektiv (die Flanken 28 werden nicht beschichtet) mit der gewünschten teilreflektiven Beschichtung versehen (Fig. 28).

Die reflektiven Facetten 26 für den zweiten Umlenkabschnitt 17 können im Prinzip in gleicher Weise hergestellt werden. Hier kann jedoch auf die reflektive Schicht 31 verzichtet werden. Daher können die Facetten 26 direkt in der Ausnehmung 37 gebildet werden. Alternativ ist es möglich, sie auf der transparenten Schicht 42 auszubilden. Die Facetten 26 können mit einer teilreflektiven oder einer reflektiven (möglichst 100% Reflexion) Beschichtung versehen werden.

Der zweite Teilkörper 36 wird in dem der Ausnehmung 37 gegenüberliegenden Bereich mit der reflektiven Schicht versehen (nicht gezeigt).

Der erste Teilkörper 35 wird dann mit dem zweiten Teilkörper 36 verbunden, so dass aufgrund der Ausnehmung 37 ein Hohlraum vorliegt. Dieser wird mit transparentem Material aufgefüllt, das bevorzugt das gleiche Material ist wie das des ersten und zweiten Teilkörpers 35 und 36.

Die Auffüllung der Ausnehmung 37 kann auch vor dem Verbinden der beiden Teilkörper 35 und 36 durchgeführt werden. In diesem Fall kann die reflektive Schicht statt auf den zweiten Teilkörper 36 in einer Abwandlung auch auf der Auffüllung der Ausnehmung 37 gebildet werden.

Natürlich können die beschriebenen Ausführungsformen bzw. Merkmale von diesen (soweit sinnvoll) miteinander kombiniert werden, wobei die Erfindung in den Ansprüchen definiert ist.

## Patentansprüche

1. Brillenglas für eine auf den Kopf eines Benutzers aufsetzbare und ein Bild erzeugende Anzeigevorrichtung (1),
mit einem eine Vorderseite (8) und eine Rückseite (9) aufweisenden Brillenglaskörper (7), wobei die Vorderseite (8) und/oder die Rückseite (9) gekrümmt sind/ist und der Brillenglaskörper (7) zumindest einen ersten und einen zweiten Teilkörper (35, 36) aufweist,
und mit, in Draufsicht auf das Brillenglas (3, 4) gesehen, einem Einkoppelabschnitt (17) in einem Randbereich (12) des Brillenglases (3, 4) und einem Auskoppelabschnitt (16) in einem Mittelbereich (13) des Brillenglases (3, 4),
wobei das Brillenglas (3, 4) dazu geeignet ist, Lichtbündel (24) von Pixeln des erzeugten Bildes, die über den Einkoppelabschnitt des Brillenglases in das Brillenglas (3, 4) eingekoppelt sind, im Brillenglas (3, 4) bis zum Auskoppelabschnitt (16) zu führen und über den Auskoppelabschnitt (16) aus dem Brillenglas (3, 4) auszukoppeln,
wobei eine plane erste Reflexionsfläche (18, 31) und eine von der ersten Reflexionsfläche (18, 31) beabstandete plane zweite Reflexionsfläche (19, 32) im Brillenglaskörper (7) vorgesehen sind, die sich jeweils in einer Richtung vom Einkoppelabschnitt (17) zum Auskoppelabschnitt (16) erstrecken und die jeweils von der Vorder- und Rückseite (8, 9) des Brillenglaskörpers (7) beabstandet sind,
wobei die Lichtbündel (24) durch Reflexionen an den beiden Reflexionsflächen (18, 31; 19, 32) in der Richtung vom Einkoppelabschnitt (17) zum Auskoppelabschnitt (16) geführt sind,
und wobei zumindest eine der ersten und zweiten Reflexionsfläche (18, 31; 19, 32) im ersten oder zweiten Teilkörper (35, 36) vorgesehen und in Richtung vom ersten zum zweiten Teilkörper (35, 36) von der Grenzfläche (38, 39) des entsprechenden Teilkörpers (35, 36) versetzt ist,
**dadurch gekennzeichnet, dass** die einander zugewandten Grenzflächen (38, 39) der ersten und zweiten Teilkörper (35, 36) in direktem Kontakt stehen.

2. Brillenglas nach Anspruch 1, bei dem die erste Reflexionsfläche (31) im ersten Teilkörper (35) und beabstandet von der Grenzfläche (38) des ersten Teilkörpers (35) vorgesehen ist und die zweite Reflexionsfläche (32) im zweiten Teilkörper (36) und beabstandet von der Grenzfläche (39) des zweiten Teilkörpers (36) vorgesehen ist.

3. Brillenglas nach Anspruch 1, bei dem die erste Reflexionsfläche (31) im ersten Teilkörper (35) und beabstandet von der Grenzfläche (28) des ersten Teilkörpers (35) vorgesehen ist und die zweite Reflexionsfläche (32) an der Grenzfläche (39) des zweiten Teilkörpers (36) ausgebildet ist.

4. Brillenglas nach einem der obigen Ansprüche, bei dem der Auskoppelabschnitt (16) einen Pupillenexpander für die Lichtbündel (24) aufweist und/oder bei dem die erste und zweite Reflexionsfläche (18,31; 19, 32) parallel zueinander sind.

5. Brillenglas nach einem der obigen Ansprüche, bei dem im Auskoppelabschnitt (16) ein erster Umlenkabschnitt mit einer reflektiven Fresnel-Struktur ausgebildet ist, die die Lichtbündel (24, 24', 24", 24"') so in Richtung zur Rückseite (9) umlenkt, dass sie über die Rückseite (9) ausgekoppelt werden.

6. Brillenglas nach Anspruch 5, bei dem die Fresnel-Struktur mehrere reflektive Facetten (27) aufweist, die in einer Richtung vom Randbereich (12) zum Mittelbereich (13) nebeneinander angeordnet sind, wobei bevorzugt die Facetten (27) als teilreflektive Facetten ausgebildet sind.

7. Brillenglas nach Anspruch 6, bei dem die Transparenz der Facetten (27) in der Richtung vom Randbereich (12) zum Mittelbereich (13) hin abnimmt.

8. Brillenglas nach Anspruch 6 oder 7, bei dem jeweils zwei direkt benachbarte Facetten (27) durch eine transparente Flanke (28) verbunden sind.

9. Brillenglas nach einem der Ansprüche 6 bis 8, bei dem sich die erste Reflexionsfläche (18, 31) in den Auskoppelbereich (16) erstreckt und die Fresnel-Struktur, in Richtung der auf die erste Reflexionsfläche (18, 31) fallenden Lichtbündel (24) gesehen, vor der ersten Reflexionsfläche (18, 31) liegt, wobei bevorzugt die Facetten (27) auf der ersten Reflexionsfläche (31) ausgebildet sind und der Bereich zwischen den Facetten (27) und der ersten Reflexionsfläche (31) mit einem Material aufgefüllt ist, das dem Material des Teilkörpers (35) entspricht, in dem die erste Reflexionsfläche (31) liegt.

10. Brillenglas nach einem der Ansprüche 5 bis 9, bei dem sich die zweite Reflexionsfläche (19, 32) bis in den Auskoppelbereich (16) erstreckt und die Fresnel-Struktur, in Richtung der auf die zweite Reflexionsfläche (19, 32) fallenden Lichtbündel gesehen, vor der zweiten Reflexionsfläche (19, 32) liegt.

11. Brillenglas nach einem der obigen Ansprüche, bei dem die erste und zweite Reflexionsfläche (19, 32) durch Grenzflächen einer Führungsplatte (14) gebildet sind, die in den ersten und/oder zweiten Teilkörper (35, 36) eingesetzt ist, wobei bevorzugt die Führungsplatte (14) seitlich aus dem Brillenglaskörper (7) vorsteht und der Einkoppelabschnitt (17) in dem seitlich vorstehenden Teil der Führungsplatte (14) ausgebildet ist.

12. Brillenglas nach einem der Ansprüche 1 bis 10, bei dem die erste und/oder zweite Reflexionsfläche (18, 31; 19, 32) im ersten und/oder zweiten Teilkörper (35, 36) ausgebildet ist.

13. Brillenglas nach einem der obigen Ansprüche, bei dem
- die erste und/oder zweite Reflexionsfläche (18, 19) die Reflexion der Lichtbündel durch innere Totalreflexion bewirken/bewirkt;
- die erste und/oder zweite Reflexionsfläche (31, 32) durch eine Reflexionsschicht (31, 32) gebildet sind/ist;
- im Bereich des Einkoppelabschnitts (17) ein zweiter Umlenkabschnitt vorgesehen ist, der die Lichtbündel (24) so umlenkt, dass sie durch die Reflexionen an der ersten und zweiten Reflexionsfläche (18, 31; 19, 32) bis zum Auskoppelabschnitt (16) geführt sind; und/oder
- der Einkoppel- und/oder Auskoppelabschnitt (17, 16) eine abbildende Wirkung aufweisen/aufweist.

14. Brillenglas nach einem der obigen Ansprüche, bei dem der Einkoppelabschnitt (17) eine Kollimationswirkung aufweist und/oder bei dem der Einkoppelabschnitt (17) refraktiv und/oder reflektiv ist.

15. Anzeigevorrichtung mit
einer auf den Kopf eines Benutzers aufsetzbaren Haltevorrichtung (2),
einem an der Haltevorrichtung (2) befestigten Bilderzeugungsmodul (5), das ein Bild erzeugt, und
einer an der Haltevorrichtung (2) befestigten Abbildungsoptik, die ein Brillenglas (3, 4) nach einem der obigen Ansprüche aufweist und die das erzeugte Bild im auf dem Kopf aufgesetzten Zustand der Haltevorrichtung (2) so abbildet, dass es der Benutzer als virtuelles Bild wahrnehmen kann.

## Claims

1. Spectacle lens for a display device (1) that can be fitted on the head of a user and generates an image,
with a spectacle lens body (7) comprising a front side (8) and a rear side (9), wherein the front side (8) and/or the rear side (9) is/are curved and the spectacle lens body (7) comprises at least a first and a second partial body (35, 36),
and with, seen in top view onto the spectacle lens (3, 4), a coupling-in section (17) in an edge area (12) of the spectacle lens (3, 4) and a coupling-out section (16) in a central area (13) of the spectacle lens (3, 4),
wherein the spectacle lens (3, 4) is suitable for guiding light bundles (24) of pixels of the generated image, which are coupled into the spectacle lens (3, 4) via the coupling-in section of the spectacle lens, in the spectacle lens (3, 4) to the coupling-out section (16) and coupling them out of the spectacle lens (3, 4) via the coupling-out section (16),
wherein a flat first reflecting surface (18, 31) and a flat second reflecting surface (19, 32) spaced apart from the first reflecting surface (18, 31) are provided in the spectacle lens body (7), which extend, in each case, in a direction from the coupling-in section (17) to the coupling-out section (16) and which are, in each case, spaced apart from the front and rear side (8, 9) of the spectacle lens body (7),
wherein the light bundles (24) are guided by means of reflections at the two reflecting surfaces (18, 31; 19, 32) in the direction from the coupling-in section (17) to the coupling-out section (16),
and wherein at least one of the first and second reflecting surfaces (18, 31; 19, 32) is provided in the first or second partial body (35, 36) and is offset from the boundary surface (38, 39) of the corresponding partial body (35, 36) in the direction from the first to the second partial body (35, 36),
**characterized in that** the mutually facing boundary surfaces (38, 39) of the first and second partial body (35, 36) are in direct contact.

2. Spectacle lens according to claim 1, in which the first reflecting surface (31) is provided in the first partial body (35) and spaced apart from the boundary surface (38) of the first partial body (35) and the second reflecting surface (32) is provided in the second partial body (36) and spaced apart from the boundary surface (39) of the second partial body (36).

3. Spectacle lens according to claim 1, in which the first reflecting surface (31) is provided in the first partial body (35) and spaced apart from the boundary surface (28) of the first partial body (35) and the second reflecting surface (32) is formed at the boundary surface (39) of the second partial body (36).

4. Spectacle lens according to one of the above claims, in which the coupling-out section (16) comprises a pupil expander for the light bundles (24) and/or in which the first and second reflecting surfaces (18,31; 19, 32) are parallel to each other.

5. Spectacle lens according to one of the above claims, in which, in the coupling-out section (16), a first deflecting section is formed with a reflective Fresnel structure which deflects the light bundles (24, 24', 24", 24"') in the direction of the rear side (9) such that they are coupled out via the rear side (9).

6. Spectacle lens according to claim 5, in which the Fresnel structure comprises several reflective facets (27) which are arranged next to each other in a direction from the edge area (12) to the central area (13), wherein preferably the facets (27) are formed as partially reflective facets.

7. Spectacle lens according to claim 6, in which the transparency of the facets (27) decreases in the direction from the edge area (12) to the central area (13).

8. Spectacle lens according to claims 6 or 7 in which, in each case, two directly neighbouring facets (27) are connected by a transparent face (28).

9. Spectacle lens according to claims 6 to 8, in which the first reflecting surface (18, 31) extends into the coupling-out area (16) and the Fresnel structure lies in front of the first reflecting surface (18, 31), seen in the direction of the light bundles (24) striking the first reflecting surface (18, 31), wherein preferably the facets (27) are formed on the first reflecting surface (31) and the area between the facets (27) and the first reflecting surface (31) is filled with a material which corresponds to the material of the partial body (35) in which the first reflecting surface (31) lies.

10. Spectacle lens according to one of claims 5 to 9, in which the second reflecting surface (19, 32) extends into the coupling-out area (16) and the Fresnel structure lies in front of the second reflecting surface (19, 32), seen in the direction of the light bundles striking the second reflecting surface (19, 32).

11. Spectacle lens according to one of the above claims, in which the first and second reflecting surfaces (19, 32) are formed by boundary surfaces of a guide plate (14) which is inserted in the first and/or second partial body (35, 36), wherein preferably the guide plate (14) projects laterally from the spectacle lens body (7) and the coupling-in section (17) is formed in the laterally projecting part of the guide plate (14).

12. Spectacle lens according to one of claims 1 to 10, in which the first and/or second reflecting surface (18, 31; 19, 32) is formed in the first and/or second partial body (35, 36).

13. Spectacle lens according to one of the above claims, in which
- the first and/or second reflecting surface (18, 19) bring/brings about the reflection of the light bundles by means of total internal reflection;
- the first and/or second reflecting surfaces (31, 32) is/are formed by a reflecting layer (31, 32);
- a second deflecting section, which deflects the light bundles (24) such that they are guided to the coupling-out section (16) by means of the reflections at the first and second reflecting surface (18, 31 ; 19, 32), is provided in the area of the coupling-in section (17); and/or
- the coupling-in and/or coupling-out section (17, 16) has/have an imaging effect.

14. Spectacle lens according to one of the above claims, in which the coupling-in section (17) has a collimation effect and/or in which the coupling-in section (17) is refractive and/or reflective.

15. Display device with
a holder (2) that can be fitted on the head of a user,
an image-generating module (5) secured to the holder (2), which generates an image, and
an imaging optical system secured to the holder (2), which comprises a spectacle lens (3, 4) according to one of the above claims and which, when the holder (2) is fitted on the head, images the generated image such that the user can perceive it as a virtual image.

## Revendications

1. Verre de lunettes pour ensemble d'affichage (1) apte à être posé sur la tête d'un utilisateur et formant une image, présentant :
un corps (7) de verre de lunettes présentant une face avant (8) et une face arrière (9), la face avant (8) et/ou la face arrière (9) étant incurvées et le corps (7) de verre de lunettes présentant au moins une première et une deuxième partie (35, 36) de corps,
une section d'entrée (17) située dans une vue en plan du verre de lunettes (3, 4) dans une bordure (12) du verre de lunettes (3, 4) et une section de sortie (16) située dans une partie (13) située au milieu du verre de lunettes (3, 4) dans cette vue en plan,
le verre de lunettes (3, 4) convenant pour guider dans le verre de lunettes (3, 4) des faisceaux lumineux (24) de pixels de l'image formée entrant dans le verre de lunettes (3, 4) par l'intermédiaire de la section d'entrée du verre de lunettes jusqu'à la section de sortie et les faire sortir du verre de lunettes (3, 4) par l'intermédiaire de la section de sortie,
une première surface réfléchissante plane (18, 31) et une deuxième surface réfléchissante plane (19, 32) située à distance de la première surface réfléchissante (18, 31) étant prévues dans le corps (7) de verre de lunettes, s'étendant chacune dans une direction allant de la section d'entrée (17) à la section de sortie (16) et étant chacune située à distance de la face avant et de la face arrière (8, 9) du corps (7) de verre de lunettes,
les faisceaux lumineux (24) étant guidés dans la direction allant de la section d'entrée (17) à la section de sortie (16) par des réflexions sur les deux surfaces réfléchissantes (18, 31 ; 19, 32) et
la première surface réfléchissante plane et/ou la deuxième surface réfléchissante plane (18, 31 ; 19, 32) étant prévues dans la première ou dans la deuxième partie (35, 36) du corps et étant décalées de la surface frontière (38, 39) de la partie (35, 36) correspondante du corps dans la direction allant de la première à la deuxième partie (35, 36) du corps,
**caractérisé en ce que**
les surfaces frontières (38, 39), tournées l'une vers l'autre, de la première et de la deuxième partie (35, 36) du corps sont en contact direct.

2. Verre de lunettes selon la revendication 1, dans lequel la première surface réfléchissante (31) est prévue dans la première partie (35) du corps à distance de la surface frontière (38) de la première partie (35) du corps et la deuxième surface réfléchissante (32) est prévue dans la deuxième partie (36) du corps à distance de la surface frontière (39) de la deuxième partie (36) du corps.

3. Verre de lunettes selon la revendication 1, dans lequel la première surface réfléchissante (31) est prévue dans la première partie (35) du corps à distance de la surface frontière (28) de la première partie (35) du corps et la deuxième surface réfléchissante (32) est formée sur la surface frontière (39) de la deuxième partie (36) du corps.

4. Verre de lunettes selon l'une des revendications précédentes, dans lequel la section de sortie (16) présente un dilatateur de pupille pour les faisceaux lumineux (24) et/ou dans lequel la première surface réfléchissante et la deuxième surface réfléchissante (18, 31 ; 19, 32) sont parallèles l'une à l'autre.

5. Verre de lunettes selon l'une des revendications précédentes, dans lequel une première section de renvoi à structure réfléchissante de Fresnel est formée dans la section de sortie (16) et renvoie en direction de la face arrière (9) les faisceaux lumineux (24, 24', 24'', 24''') de telle sorte qu'ils sortent par la face arrière (9).

6. Verre de lunettes selon la revendication 5, dans lequel la structure de Fresnel présente plusieurs facettes réfléchissantes (27) disposées les unes à côté des autres dans la direction allant de la bordure (12) à la partie centrale (13), les facettes (27) étant configurées de préférence comme facettes partiellement réfléchissantes.

7. Verre de lunettes selon la revendication 6, dans lequel la transparence des facettes (27) diminue dans la direction allant de la bordure (12) à la partie centrale (13).

8. Verre de lunettes selon les revendications 6 ou 7, dans lequel deux facettes (27) immédiatement voisines sont reliées par un flanc (28) transparent.

9. Verre de lunettes selon l'une des revendications 6 à 8, dans lequel la première surface réfléchissante (18, 31) s'étend dans la section de sortie (16) et la structure de Fresnel est située en avant de la première surface réfléchissante (18, 31) dans la direction des faisceaux lumineux (24) incidents sur la première surface réfléchissante (18, 31), les facettes (27) étant formées de préférence sur la première surface réfléchissante (31) et la zone située entre les facettes (27) et la première surface réfléchissante (31) étant remplie d'un matériau qui correspond au matériau de la première partie (35) du corps dans lequel est située la première surface réfléchissante (31) .

10. Verre de lunettes selon l'une des revendications 5 à 9, dans lequel la deuxième surface réfléchissante (19, 32) s'étend jusque dans la section de sortie (16) et la structure de Fresnel est située en avant de la deuxième surface réfléchissante (19, 32) dans la direction des faisceaux lumineux incidents sur la deuxième surface réfléchissante (19, 32).

11. Verre de lunettes selon l'une des revendications précédentes, dans lequel la première et la deuxième surface réfléchissante (19, 32) sont formées par des surfaces frontières d'une plaque de guidage (14) insérée dans la première et/ou la deuxième partie (35, 36) du corps, la plaque de guidage (14) débordant latéralement du corps (7) de verre de lunettes et la section d'entrée (17) étant formée dans la partie de la plaque de guidage (14) qui déborde latéralement.

12. Verre de lunettes selon l'une des revendications 1 à 10, dans lequel la première et/ou la deuxième surface réfléchissante (18, 31 ; 19, 32) sont formées dans la première et/ou la deuxième partie (35, 36) du corps.

13. Verre de lunettes selon l'une des revendications précédentes, dans lequel
- la première et/ou la deuxième surface réfléchissante (18, 19) assurent la réflexion des faisceaux lumineux par réflexion totale interne,
- la première et/ou la deuxième surface réfléchissante (31, 32) sont formées par une couche réfléchissante (31, 32),
- une deuxième section de renvoi qui renvoie les faisceaux lumineux (24) de telle sorte qu'ils sont guidés jusqu'à la section de sortie (16) par les réflexions sur la première et la deuxième surface réfléchissante (18, 31 ; 19, 32) et/ou
- la section d'entrée et/ou la section de sortie (17, 16) exercent un effet d'imagerie.

14. Verre de lunettes selon l'une des revendications précédentes, dans lequel la section d'entrée (17) exerce un effet de collimation et/ou dans lequel la section d'entrée (17) est réfractrice et/ou réfléchissante.

15. Ensemble d'affichage présentant :
un ensemble de maintien (2) apte à être placé sur la tête d'un utilisateur,
un module (5) de formation d'image fixé sur l'ensemble de maintien (2) et formant une image et
une optique d'imagerie fixée sur l'ensemble de maintien (2), qui présente un verre de lunettes (3, 4) selon l'une des revendications précédentes et qui, lorsque l'ensemble de maintien (2) est placé sur la tête, reproduit l'image de telle sorte que l'utilisateur puisse la percevoir comme image virtuelle.
